# EUROPEAN PATENT SPECIFICATION

(11) **EP 1 021 306 B1**
(45) Date of publication and mention of the grant of the patent: **20.03.2002**
(21) Application number: 97909985.0
(22) Date of filing: 03.10.1997
(51) Int. Cl.: B60C 11/04, B60C 11/13

(54) **TREAD FOR A PNEUMATIC TIRE**
LAUFFLÄCHE FÜR LUFTREIFEN
BANDE DE ROULEMENT POUR PNEUMATIQUE

(43) Date of publication of application: 26.07.2000
(73) Proprietor: THE GOODYEAR TIRE & RUBBER COMPANY, Akron, Ohio 44316-0001 (US)
(72) Inventor: FONTAINE, Jean, François, Leon, L-9142 Buerden (LU)
(74) Representative: Leitz, Paul
(86) International application number: US9718031
(87) International publication number: WO9917944

(56) References cited:
- EP-A- 0 305 617
- EP-A- 0 600 177
- DE-A- 3 712 155
- FR-A- 782 332
- PATENT ABSTRACTS OF JAPAN vol. 015, no. 475 (M-1186), 3 December 1991 & JP 03 204308 A (BRIDGESTONE CORP), 5 September 1991,
- PATENT ABSTRACTS OF JAPAN vol. 018, no. 177 (M-1582), 25 March 1994 & JP 05 338412 A (SUMITOMO RUBBER IND LTD), 21 December 1993,

## Description

### Technical field

The present invention relates to a tread for a pneumatic radial tire.

### Background Art

The tread portion of a pneumatic tire generally comprises an elastomeric material having a plurality of grooves therein defining ground engaging rubber elements. The particular size and shape of these elements contributes significantly to the overall performance of the tire. Tire treads are generally designed to provide a particular performance, such as for instance winter, high traction or high speed performance. Thus obtaining of one particular performance characteristic is often at odds with obtaining another one.

Hydroplaning of tires on wet pavement has long been a problem in the prior art. Various tire designs, adapted to channel water away from the tire, and thereby maintain rubber contact with the road have been created. Although prior art rain tire designs, such as described e.g. in EP-A- 508 090, have improved wet traction, it is a continuing goal in the art to further improve such.

French patent 1 214 717 teaches a way to improve road adherence by providing the tread pattern with raised block elements. The raised elements are described as acting as elastic, heavily compressed projections entering the small holes in the road surface and improving thereby the grip of the tire. US patent 5 343 918 discloses a tire tread with at least one circumferentially extending row of high stiffness blocks and one of low stiffness blocks. The low stiffness blocks have a radial height between 4% and 10% superior to the radial height of the high stiffness blocks. The object is to obtain uniform handling response and to improve grip.

In French Patent FR782332A teaches that the tread height near one edge of a centermost groove extends above the average tread height to improve traction.

In the Japanese Patent Abstract JP05338412A to Sumitomo Rubber Ind LTD, it teaches the groove wall edges can be acute angles to improve the useful life of the tire.

In the most relevant document EP-A-0-508 090 the features recited in the preamble of the claim are disclosed. Those features after the preamble being the novel features not found in the art in the combination claimed. The dependent claims representing features of the various preferred embodiments of the invention.

It is an object of the present invention to provide a pneumatic tire having improved wet traction while maintaining good handling, noise and irregular wear characteristics.

Other objects of the invention will be apparent from the following description and claims. These objects are achieved by the combination of the features of claim 1.

### Disclosure of Invention

A tread 2 for a pneumatic tire 1 has elastomeric material. The tread 2 has a central portion and two lateral portions 3, 4, each lateral portion having laterally extending grooves defining ribs or lugs therein.

The central portion includes three laterally spaced circumferentially extending grooves 7, 8, 9, defining two circumferentially extending center ribs 22, 23 having an axial width RW ranging from 5 % to 25 % of the tread width TW of the ground engaging tread portion.

The centermost circumferentially extending groove 8 has on both sides tapered groove wall edges P₀, P₂, which form with a plane NP parallel to the equatorial plane EP acute angles α₁ and α₂ ranging between 1 and 10 degrees, preferably between 2 and 7 degrees, more preferably between 3 and 5 degrees. The tread height near both edges of the centermost groove extending radially above the average tread height a maximum extra tread height comprised of .3 mm and 1.7 mm most preferably between .8 and 1.2 mm. This extra tread height diminishes progressively from the groove edges towards the respective nearest shoulder of the tire over a distance not exceeding 10% of the tread width.

Preferably the circumferentially extending center ribs 22, 23 are cut by sipes 14 and may include blind grooves *52,* 53.

The width of the circumferentially extending centermost groove 8, 53, 68, at the tread surface is between 5 and 20 mm and the groove is spaced from the equatorial plane a distance equaling at most 25 % of the treadwidth TW.

The tread 2 is delimited by a first and a second shoulder 3, 4 and having a central portion and two lateral portions. Each lateral portion has circumferentially and laterally extending grooves defining ribs or lugs. The central portion includes three laterally spaced circumferentially extending grooves defining two circumferentially extending center ribs having an axial width RW ranging from about 5 % to 25 % of the tread width TW of the ground engaging tread portion.

The centermost circumferentially extending groove has on both sides tapered groove edges, which form with a plane parallel to the equatorial plane acute angles á₁ and á₂ ranging between 1 and 10 degrees.

In an axial cross section of the tread 2, the radially outer tread surface, on a first side and second side of the centermost groove, has at least a first and at least a second radius of curvature R₁ and R₂ respectively. The first radius of curvature R₁ has its center C₁ radially outwardly of the tread surface, in a plane parallel to the equatorial plane and located between the first side of the center groove and the first shoulder of the tire, R₁ extends from a point P₀ on the edge the groove wall forms with the tread surface to a point P₁ located a distance between 5 % and 15 % of the treadwidth, defining thereby a first radially outer convex tread surface.

The second radius of curvature R₂, has its center C₂ radially outwardly of the tread surface, in a plane parallel to the equatorial plane and located between the second side of the center groove and the second shoulder of the tire. R₂ extends from a point P₂ on the edge of the groove wall to a point P₃ located a distance between 5% and 15 % of the treadwidth, defining thereby a second radially outer convex tread surface.

The centers of curvature C₁ and C₂ lie preferably in a plane located from the respective edges of the centermost groove they define, a distance ranging between 5 % and 10% of the treadwidth. The point P₁ is spaced from P₀ a distance of about 7% of the tread width and the point P₃ is spaced from P₂ a distance of about 7% of the treadwidth.

### Definitions

"Aspect Ratio" of the tire means the ratio of its section height to its section width.

"Bead" means that part of the tire comprising an annular tensile member wrapped by ply cords and shaped, with or without other reinforcement elements such as flippers, chippers, apexes, toe guards and chaffers, to fit the design rim.

"Carcass" means the tire structure apart from the belt structure, tread, undertread, and sidewall rubber over the plies, but including the beads.

"Crown" refers to the circumferentially outermost portion of the carcass substantially within the width limits of the tread.

"Design rim" means a rim having a specified Configuration and width.

"Directional tread" refers to a tread design which has a preferred direction of rotation in the forward direction of travel.

"Equatorial plane (EP)" means the plane Perpendicular to the tire's axis of rotation and passing through the center of its tread. "Footprint" means the contact patch or area of contact of the tire tread with a flat surface at zero speed and under design load and pressure.

"Footprint Net-to-gross" refers to the actual footprint of a deflected tire and is the ratio of the ground contacting surface area of the tread to the total tread footprint area including the groove void area.

"Groove" means an elongated void area in a tread that may extend circumferentially or laterally about the tread in a straight, curved, or zig-zag manner. Grooves ordinarily remain open in the tire footprint. Circumferentially and laterally extending grooves sometimes have common portions and may be sub-classified as "wide" or "narrow". Grooves may be of varying depths in a tire. If such narrow or wide grooves are of substantially reduced depth as compared to wide circumferential grooves which they interconnect, they are regarded as forming "tie bars" tending to maintain a rib-like character in the tread region involved.

"Sipes" refers to small slots molded into ribs or lugs of a tire that subdivides the tread surface and improves traction characteristics. Sipes tend to close completely in a tire footprint.

"Lugs" refer to discontinuous radial rows of tread rubber in direct contact with the road surface.

"Normal load and inflation pressure" refers to the specific design inflation pressure and load assigned by the appropriate standards organization for the design rim and service condition for a tire of specific size. Examples of standards are the Tire and Rim Association Manual and the European Tire and Rim Technical Organization.

"Pneumatic tire" means a laminated mechanical device of generally toroidal shape (usually an open-torus) having beads and a tread and made of rubber, chemicals, fabric and steel or other materials. When mounted on the wheel of a motor vehicle, the tire through its tread provides traction and contains the fluid that sustains the vehicle load.

"Radial" and "radially" are used to mean directions radially toward or away from the axis of rotation of the tire.

"Rib" means a circumferentially extending strip of rubber on the tread which is defined by at least one circumferential "wide groove" and either a second such groove or a lateral edge of the tread, the strip of rubber being laterally undivided by full-depth narrow or wide grooves.

"Shoulder" refers to the upper portion of sidewall just below the tread edge.

"Sidewall" means that portion of a tire between the tread and the bead.

"Tread" means a molded rubber component which, when bonded to a tire casing, includes that portion of the tire that comes into contact with the road when the tire is normally inflated and under normal load.

"Tread width" means the arc length of the road contacting tread surface in the axial direction, that is, in a plane parallel to the axis of rotation of the tire.

### Brief Description of Drawings

Figure 1 is a perspective view of a tire embodying a tread made in accordance with the present invention.
Figure 2 shows a footprint of the tread of the tire of figure 1.
Figure 3 is a cross-section of the footprint shown in figure 2, along the line III-III.
Figure 4 is a detailed cross-section of the center part of the tread of figure 1.
Figure 5 is a footprint of a directional tread according to the invention.
Figure 6 shows the footprints of two asymmetrical directional tire treads according to the invention.

### Detailed Description of the Invention

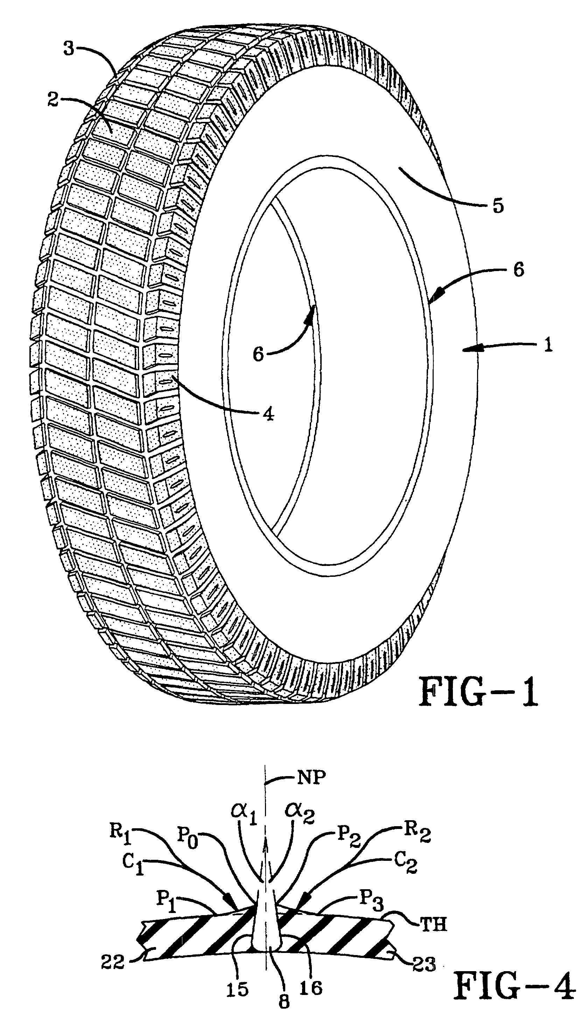

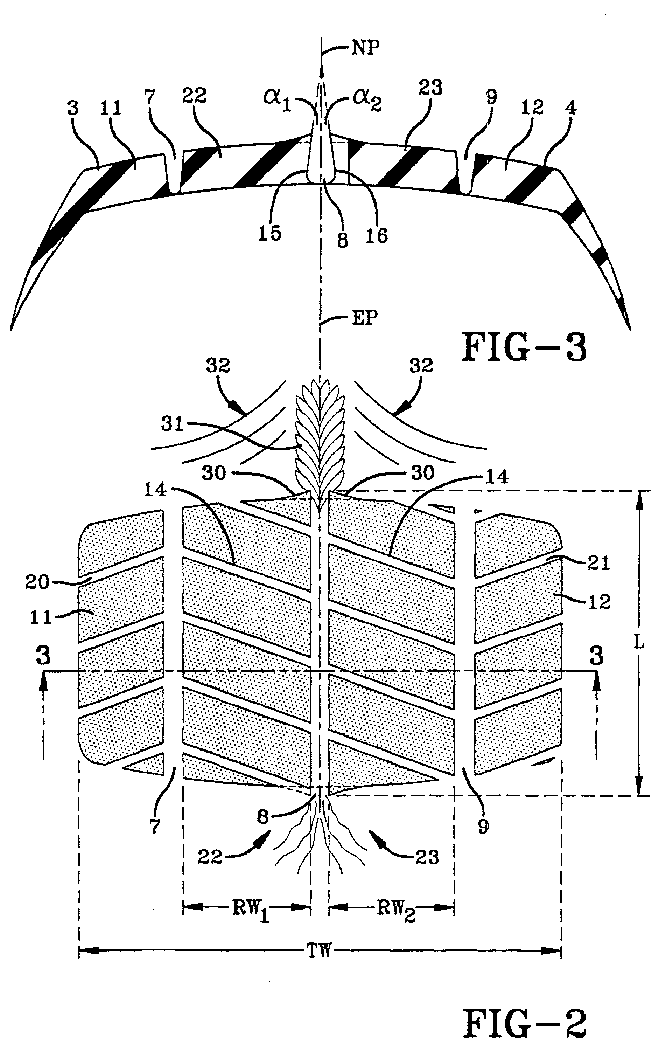

Referring to Figures 1 and 2, there is represented a pneumatic tire 1 including in its crown region a tread 2 made in accordance with the present invention. The tire 1 is of the radial type construction and designed for use on passenger vehicles. The tread 2 is delimited by a first shoulder 3 and a second shoulder 4 i.e. lateral portions 3 and 4. Sidewalls 5 connect the shoulders 3, 4 to the beads 6. The tread 2 includes three circumferentially extending straight grooves 7, 8, 9 and two sets of laterally extending grooves 20 and 21. The various grooves are respectively laterally and circumferentially spaced apart across the surface of the tread and divide the tread into circumferentially extending ribs 22 and 23 near the equatorial plane EP and rows of blocks 11, 12 near the shoulders 3, 4 of the tire.

The two ribs 22, 23 have respectively an axial width RW₁ and RW₂ and extend substantially an equal distance on either side of the equatorial plane EP. The widths RWᵢ range each from 5 % to 25 % and preferably from 10 % to 15 % of the tread width TW of the ground engaging tread portion. The width of the circumferentially extending centermost groove 8 at the tread surface is between 5 and 20 mm.

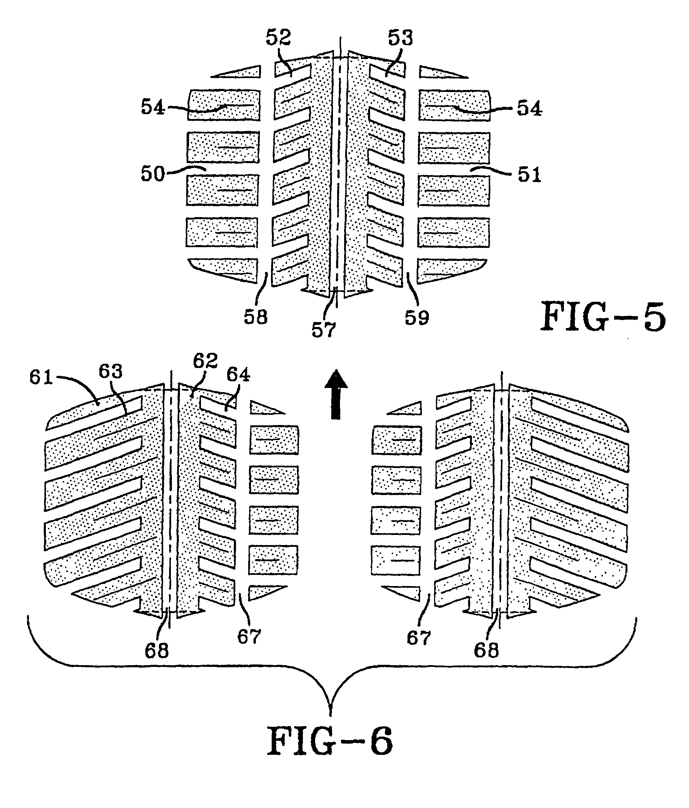

The laterally extending grooves 20 and 21 near the shoulders 3, 4 are disposed circumferentially about the tire in a repetitive manner, their widths and inclinations depending on the pitch variation, as is practiced in the industry for noise reduction. The grooves 20 and 21 may form opposed angles with the equatorial plane so as to give a directional tire, as e.g. represented in Fig. 5. or -as represented- the grooves 20 and 21 may make complementary angles with the equatorial plane so as to provide a non directional tire.

In a preferred embodiment, the ribs 22, 23 are cut by narrow grooves, i.e. grooves having a width ranging between 0.5 % to 2% of the treadwidth, or by sipes 14. The narrow grooves or sipes 14 have preferably an inclination with respect to the equatorial plane ranging between 30 and 60 degrees.

Though the invention may be implemented in any passenger and light truck tire, low aspect ratio tires where the length of the contact patch in the footprint is smaller than the treadwidth TW are of special interest. In tires having aspect ratios below 60 the invention provides a most desirable increase of the hydroplaning speed.

In order to facilitate the flow of water out of the middle portion of the contact patch of the tire footprint, the centermost circumferentially extending groove 8, which is either cut by, or is spaced from the equatorial plane EP a distance equaling at most 25 % of the treadwidth, preferably at most 10%, has on both sides tapered groove edges. Such can be distinguished in Figure 3. In an axial section of the tire, the angles α₁, α₂ formed respectively by the uppermost portion of a first and second lateral side 15, 16 of the groove 8 with a plane NP parallel to the equatorial plane are acute, so that the distance between the opposing sidewalls of the groove diminishes radially outwardly. The angles α₁ range between 1 and 10 degrees, and are preferably between 2 and 7 degrees and more preferably between 3 and 5 degrees. The groove walls form with a plane NP parallel to the equatorial plane, such negative taper angle from the tread surface of a new tire down to 1-3 mm above the groove bottom. In a preferred embodiment of the invention the angles formed by groove portions on the same sidewall at different radial heights are substantially similar. In case the center groover 8 is not located in the middle of the tread, choosing different taper angles for the opposing sidewalls might be of advantage.

Reference is now more specifically made to Figure 4. Jointly with the negatively by tapered groove wall angles α₁, the tread height near both edges P₀,P₂ of the centennost groove 8 extends above the average tread height TH and this extra tread height diminishes progressively from the groove edges P₀,P₂ towards the respective shoulders 3,4 of the tire on a distance not exceeding 10%, preferably not exceeding 5% of the treadwidth. At both centermost groove sidewalls, the tread extends radially between .3 mm and 1.7 mm, preferably between .6 and 1.4 mm and most preferably between .8 and 1.2 mm above the average tread height TH. Put in other words, in an axial cross section of the tread, the radially outer tread surface, on a first side 15 and a second side 16 of the centermost groove 8, has respectively a first and second radius of curvature R₁, R₂ wherein the first radius of curvature R₁, having its center C₁ radially outwardly of the tread surface, in a plane located between the first side 15 of the center groove and the first shoulder 3 of the tire, extends from a point P₀ on the edge, the groove wall 15 forms with the tread surface, to a point P₁ located a distance between 5 % and 15% of the treadwidth, defining thereby a first radially outer convex tread surface; the second radius of curvature R₂, having its center C₂ radially outwardly of the tread surface, in a plane located between the second side 16 of the centermost groove and the second shoulder 4 of the tire, extends from a point P₂ on the edge, the groove wall 16 forms with the tread surface to a point P₃ located a distance between 5 % and 15 % of the treadwidth defining thereby a second radially outer convex tread surface.

The centers of curvature C₁ and C₂ lie preferably in a plane parallel to the equatorial plane located from the respective edges P₀ and P₁ a distance ranging between 5 % and 10% of the treadwidth.

The radii of curvature, R₁ and R₂, are substantially similar and range between 5 mm and 30 mm. More preferably, the radii of curvature range between 10 mm and 20 mm.

In a further embodiment of the invention, the radially outer tread surface of the tread near the centermost groove is defined by two or three different radii on one or both sides of the groove. The farther the centers of curvature lie away from the grove wall, the longer the radii are.

It is understood that the remaining portions of the tread surface are defined by the usual two or three radii of curvature, having values comprised between 150 mm and infinity, whereby the centers of curvature lie radially inwardly of the tread surface they define.

The effect of the design according to the invention is explained in Figure 2 where the flow of water in a tire has been represented. The raised groove edges 30 contact the ground or the water on the ground a few millimeters before the other portions of the tread. Similarly these same groove edges are the last portions of the tread to leave the footprint and define thereby the maximum length L of the footprint.

If the road is covered by water, the groove edges 30 impart a flowing movement to the water which flowing movement is normal to the leading footprint edge. As in the present case the leading footprint edge presents a convex curvature to the water, the latter is pushed sideward out of the middle of the footprint. This beneficial effect of the invention based on the shape of the leading edge of the footprint is boosted by the jet of water 31, squeezed out of the centermost groove 8 as the tread enters the footprint. The water jet enhances the effect of the convex curvature of the center portion of the leading footprint edge and initiates lateral water flow 32 in front -and out of- the footprint. The shape or length of this water jet depends on the car speed, the water depth and resulting water pressure buildup, the exact design and tread depth of the tire, the pavement below the water etc. Though the length of the water jet diminishes continuously as the car speed increases and disappears at speeds above 90 km/h, the combined effect of the convex leading edge of the footprint together with the water jet will be a significant increase of the aquaplaning resistance of a tire in deep water.

Figure 5 represents a footprint of a directional tread according to the invention which tread is symmetrical with respect to the equatorial plane of the tire. In this embodiment of the invention, the tread includes three circumferentially extending straight grooves, and four sets of laterally extending grooves 50, 51, 52, 53. The various grooves are respectively laterally and circumferentially spaced apart across the surface of the tread and divide the tread into circumferentially extending ribs near the equatorial plane EP and rows of blocks near the shoulders of the tire.

The two ribs, which are defined by the two circumferentially extending shoulder grooves 58, 59 and the center groove 57, are adjacent to the equatorial plane EP. The ribs include circumferentially spaced blind grooves *52* and 53, originating in the shoulder grooves 58, 59. The laterally extending grooves 50, 51 near the shoulders of the tire are disposed circumferentially about the tire in a repetitive manner, defining thereby lugs 54. The ribs and the lugs 54 may include sipes so as to optimize noise and wear properties of the tire; the sipes may be straight, curved or zigzag like and they may have the same depth as the neighboring grooves or varying depths. In order to improve the aquaplaning resistance of this directional design, the center groove 57 has a section as represented in figure 4.

Figure 6 shows on its left side a footprint of an asymmetrical directional tire tread to be mounted on the left side of a car and on its right side a footprint of an asymmetrical directional tire tread to be mounted on the right side of a car. The forward travel direction of the car is represented by an arrow. Though only two circumferentially extending grooves 67, 68 have been represented, three or more may be foreseen. Groove 68, having a section as represented in figure 4, is delimited by two ribs 61, 62 which, as explained above with respect to figure 5, include blind grooves 63, 64 and sipes. The remaining circumferentially extending groove or grooves cooperate with laterally extending groove so as to define rows of blocks. Groove 68, is positioned towards the outer side of the car at a distance from the equatorial plane EP comprised between 10% and 30 % of the treadwidth.

The invention is further illustrated by the following example: A steel belted radial carcass tire of size 225/70 R 16 has a tread width of about 160 mm, two center ribs and 2 rows of blocks. The rows of blocks are molded to have axial widths RW₁ and RW₃ of about 30 mm and 35 mm respectively.

The nominal tread depth is about 9 mm, and the widths of the grooves depend on their axial position in the tread and the pitch variation. The circumferentially extending grooves have a width of about 30 mm.

Two carcass plies comprise 1100/2 dtex polyester reinforcement cords and an uncured cord density of 30 ends per inch (EPI) was used in the construction. The belt structure of an uncured tire comprises two single cut plies reinforced by 2+2x0.25 mm steel cords, having a cord density of about 22 EPI, forming uncured angles of about 23° with the equatorial plane, the angles of the cables in different plies extending in opposite directions.

The tread has a net to gross of 58% to 73 % and comprises an elastomeric compound having a modulus of 4 to 16 MPa, a Shore A hardness of 60 to 75, an elongation greater than 300% and a tensile strength at break greater than 15 MPa.

While certain representative embodiments have been described for the purpose of illustrating the invention, it will be apparent to those skilled in the art that various changes and modifications may be made therein without departing from the scope of the claims.

## Claims

1. A tread (2) for a pneumatic tire (1) comprising elastomeric material, said tread (2) having a central portion and two lateral portions (3,4),
- the central portion including two, preferably three laterally spaced circumferentially extending grooves (7,8,9;57,58,59;67,68), defining respectively one or two circumferentially extending center ribs (22,23) having an axial width RW;
- the lateral portions having ribs or lugs confined by circumferentially and laterally extending grooves;
- the centermost circumferentially extending groove (8,57,68) having on both sides tapered groove wall edges P₀, P₂, which form with a plane (NP) parallel to the equatorial plane (EP) acute angles α₁ and α₂,
**characterized**
**in that** α₁ and α₂ are acute angles ranging between 1 and 10 degrees, such that the distance between the opposing sidewalls (15, 16) of the centermost groove (8,57,68) diminishes radially outwardly;
**in that** said axial width RW of the center ribs (22, 23) ranges from 5% to 25% of the tread width TW of the ground engaging tread portion; and
**in that** the tread height near both groove wall edges P₀, P₂ of the centermost groove (8,57,68) extends radially above the average tread height TH a maximum extra tread height comprised between 0.3 mm and 1.7 mm, this extra tread height diminishing progressively from the groove edges P₀, P₂ towards the respective nearest shoulder of the tire (1) on a distance not exceeding 10% of the treadwidth TW.

2. A tread (2) for a pneumatic tire (1) according to claim 1, wherein the circumferentially extending center ribs (22,23) are cut by sipes (14).

3. A tread (2) for a pneumatic tire (1) according to claim 1, wherein the circumferentially extending center ribs (22,23) include blind grooves (52,53).

4. A tread (2) for a pneumatic tire (1) according to claim 1, wherein the width of the circumferentially extending centermost groove (8,57,68) at the tread surface is comprised between 5 and 20 mm.

5. A tread (2) for a pneumatic tire (1) according to claim 1, wherein the centermost circumferentially extending groove (8,57,68) is spaced from the equatorial plane (EP) a distance equaling at most 25% of the treadwidth TW.

6. A tread (2) for a pneumatic tire (1) according to claim 5, wherein the angles α₁ range between 2 and 7 degrees and more preferably between 3 and 5 degrees.

7. A tread (2) for a pneumatic tire (1) according to claim 1, wherein the extra tread height at the edges of the centermost groove (8,57,68) is comprised between 0.3 and 1.7 mm and most preferably between 0.8 and 1.2 mm.

8. A tread (2) for a pneumatic tire (1) according to claim 1, wherein
- in an axial cross section of the tread (2), the radially outer tread surface, on a first side and second side of the centermost groove, has at least a first and at least a second radius of curvature R₁ respectively R₂;
- wherein the first radius of curvature R₁, having its center C₁ radially outwardly of the tread surface, in a plane parallel (NP) to the equatorial plane (EP) and located between the first side of the center groove (8,57,68) and the first shoulder of the tire, R₁ extends from the point P₀ on the edge the groove wall forms with the tread surface to the point P₁ located a distance between 5% and 15% of the treadwidth, defining thereby a first radially outer convex tread surface; and
- wherein the second radius of curvature R₂, having its center C₂ radially outwardly of the tread surface, in a plane parallel to the equatorial plane (EP) and located between the second side (16) of the center groove and the second shoulder of the tire, extends from the point P₂ on the edge the groove side wall (16) to a point P₃ located a distance between 5% and 15% of the treadwidth, defining thereby a second radially outer convex tread surface.

9. A tread (2) for a pneumatic tire (1) according to claim 8, wherein the centers of the curvature C₁ and C₂ lie preferably in a plane located from the respective edges P₀, P₂ of the centermost groove (8,57,68) they define, a distance ranging between 5% and 10% of the treadwidth.

10. A tread (2) for a pneumatic tire (1) according to claim 8, wherein the point P₁ is spaced from P₀ a distance of about 7% of the tread width and the point P₃ is spaced from P₂ a distance of about 7% of the tread width.

11. A tread (2) for a pneumatic tire (1) according to claim 10, wherein in place of one radius of curvature, there are two different radii R₁ of curvature on at least one side of the centermost groove (8,57,68), the centers of curvature of said radii lying farther away from the respective groove wall, the longer the radii are.

12. A tread (2) for a pneumatic tire (1) according to claim 1 wherein the tire (1) has an aspect ratio below 55.

## Patentansprüche

1. Laufstreifen (2) für einen Luftreifen (1), der elastomeres Material umfasst, wobei der Laufstreifen (2) einen zentralen Abschnitt und zwei Seitenabschnitte (3, 4) aufweist,
- der zentrale Abschnitt zwei, vorzugsweise drei in Querrichtung beabstandete, sich in Umfangsrichtung erstreckende Nuten (7, 8, 9; 57, 58, 59; 67, 68) enthält, welche jeweils eine bzw. zwei sich in Umfangsrichtung erstreckende Zentralrippen (22, 23) mit einer axialen Breite RW bestimmen;
- die Seitenabschnitte Rippen oder Stollen aufweisen, welche durch sich in Umfangsrichtung und in Querrichtung erstreckende Nuten begrenzt sind;
- die mittlere sich in Umfangsrichtung erstreckende Nut (8, 57, 68) an beiden Seiten schräg liegende Nutwandkanten P₀, P₂ aufweisen, die mit einer zur Äquatorialebene (EP) parallelen Ebene (NP) spitze Winkel α₁ und α₂ bilden,
**dadurch gekennzeichnet,**
**dass** α₁ und α₂ spitze Winkel im Bereich zwischen 1 und 10 Grad sind, so dass sich der Abstand zwischen den gegenüberliegenden Seitenwänden (15, 16) der mittelsten Nut (8, 57, 68) radial nach außen verringert;
**dass** die axiale Breite RW der zentralen Rippen (22, 23) von 5% bis 25% der Laufstreifenbreite TW des bodenberührenden Laufstreifenabschnitts beträgt; und
**dass** die Laufstreifenhöhe in der Nähe beider Nutwandkanten P₀, P₂ der mittelsten Nut (8, 57, 68) sich radial über die durchschnittliche Laufstreifenhöhe TH zu einer maximalen Zusatz-Laufstreifenhöhe erstreckt, welche zwischen 0,3 mm und 1,7 mm umfasst, wobei diese Zusatz-Laufstreifenhöhe fortschreitend von den Nutkanten P₀, P₂ zu der jeweils nächstliegenden Schulter des Reifens (1) über einem Abstand geringer wird, der 10% der Laufstreifenbreite TW nicht überschreitet.

2. Laufstreifen (2) für einen Luftreifen (1) nach Anspruch 1, bei dem die sich in Umfangsrichtung erstreckenden Zentralrippen (22, 23) mit Lamellenschnitten (14) versehen sind.

3. Laufstreifen (2) für einen Luftreifen (1) nach Anspruch 1, bei dem die sich in Umfangsrichtung erstreckenden Zentralrippen (22, 23) Sacknuten (52, 53) enthalten.

4. Laufstreifen (2) für einen Luftreifen (1) nach Anspruch 1, bei dem die Breite der sich in Umfangsrichtung erstreckenden mittelsten Nut (8, 57, 68) an der Laufstreifenfläche zwischen 5 und 20 mm liegt.

5. Laufstreifen (2) für einen Luftreifen (1) nach Anspruch 1, bei dem die mittelste sich in Umfangsrichtung erstreckende Nut (8, 57, 68) von der Äquatorialebene (EP) einen Abstand aufweist, der höchstens 25% der Laufstreifenbreite TW beträgt.

6. Laufstreifen (2) für einen Luftreifen (1) nach Anspruch 5, bei dem die Winkel αᵢ zwischen 2 und 7 Grad, und mehr bevorzugt zwischen 3 und 5 Grad liegen.

7. Laufstreifen (2) für einen Luftreifen (1) nach Anspruch 1, bei dem die Zusatz-Laufstreifenhöhe an den Kanten der mittelsten Nut (8, 57, 68) zwischen 0,3 und 1,7 mm und mehr bevorzugt zwischen 0,8 und 1,2 mm beträgt.

8. Laufstreifen (2) für einen Luftreifen (1) nach Anspruch 1, bei dem
- in einem Axialquerschnitt des Laufstreifens (2) die radial äußere Laufstreifenfläche an einer ersten Seite und einer zweiten Seite der mittelsten Nut mindestens einen ersten und mindestens einen zweiten Krümmungsradius R₁ bzw. R₂ besitzt;
- bei dem der erste Krümmungsradius Ri seinen Krümmungs-Mittelpunkt C₁ radial außerhalb der Laufstreifenfläche in einer zur Äquatorialebene (EP) parallelen Ebene (NP) und zwischen der ersten Seite der Mittelnut (8, 57, 68) und der ersten Schulter des Reifens hat, und R₁ sich von dem Punkt Po an der von der Nutwand mit der Laufstreifen-Oberfläche gebildeten Kante zu dem Punkt P₁ erstreckt, der mit einem Abstand zwischen 5% und 15% der Laufstreifenbreite entfernt liegt und dadurch eine erste radial äußere konvexe Laufstreifenfläche bestimmt; und
- bei dem der zweite Krümmungsradius R₂ seinen Krümmungs-Mittelpunkt C₂ radial außerhalb der Laufstreifenfläche in einer zur Äquatorialebene (EP) parallelen Ebene und zwischen der zweiten Seite (16) der Mittelnut und der zweiten Schulter des Reifens hat, sich von dem Punkt P₂ an der Kante der Nutseitenwand (16) zu einem Punkt P₃ in einem Abstand zwischen 5% und 15% der Laufstreifenbreite erstreckt und dadurch eine zweite radial äußere konvexe Laufstreifenfläche bestimmt.

9. Laufstreifen (2) für einen Luftreifen (1) nach Anspruch 8, bei dem die Krümmungs-Mittelpunkte C₁ und C₂ vorzugsweise in einer Ebene liegen, die von den jeweiligen Kanten P₀, P₂ der mittelsten Nut (8, 57, 68), die sie bestimmen, in einem Abstand zwischen 5% und 10% der Laufstreifenbreite angeordnet ist.

10. Laufstreifen (2) für einen Luftreifen (1) nach Anspruch 8, bei dem der Punkt Pi vom Punkt Po mit einem Abstand von etwa 7% der Laufstreifenbreite beabstandet ist, und der Punkt P₃ von dem Punkt P₂ mit einem Abstand von etwa 7% der Laufstreifenbreite beabstandet ist.

11. Laufstreifen (2) für einen Luftreifen (1) nach Anspruch 10, bei dem statt eines Krümmungsradius an mindestens einer Seite der mittelsten Nut (8, 57, 68) zwei unterschiedliche Krümmungsradien R₁ vorhanden sind, wobei die Krümmungs-Mittelpunkte der Radien weiter von der jeweiligen Nutwand weg liegen, je länger die Radien sind.

12. Laufstreifen (2) für einen Luftreifen (1) nach Anspruch 1, bei dem der Reifen (1) ein Aspektverhältnis unter 55 aufweist.

## Revendications

1. Bande de roulement (2) pour un bandage pneumatique (1) comprenant une matière élastomère, ladite bande de roulement (2) possédant une portion centrale et deux portions latérales (3, 4),
- la portion centrale englobant deux, de préférence trois rainures (7, 8, 9 ; 57, 58, 59 ; 67, 68) s'étendant en direction circonférentielle et espacées en direction latérale, qui définissent respectivement une ou deux nervures centrales (22, 23) s'étendant en direction circonférentielle, qui possèdent une largeur axiale RW ;
- les portions latérales possédant des nervures ou des barrettes confinées par des rainures s'étendant en direction circonférentielle et en direction latérale ;
- la rainure la plus centrale s'étendant en direction circonférentielle (8, 57, 68) possédant, des deux côtés, des bords de parois de rainures chanfreinés P₀, P₂ qui forment, avec un plan parallèle au plan équatorial, des angles aigus α₁ et α₂,
**caractérisé**
**en ce que** α₁ et α₂ représentent des angles aigus s'étendant entre 1 et 10 degrés de telle sorte que la distance entre les parois opposées (15, 16) de la rainure la plus centrale (8, 57, 68) diminue en direction radiale vers l'extérieur ;
**en ce que** ladite largeur axiale RW des nervures centrales (22, 23) représente une valeur dans la plage de 5 % à 25 % de la largeur de bande de roulement TW de la portion de la bande de roulement entrant en contact avec le sol ; et
**en ce que** la hauteur de la bande de roulement à proximité des deux bords de parois de rainures P₀, P₂ de la rainure la plus centrale (8, 57, 68) s'étend en direction radiale au-dessus de la hauteur de bande de roulement moyenne TH sur une hauteur de bande de roulement supplémentaire maximale comprise entre 0,3 mm et 1,7 mm, cette hauteur supplémentaire de bande de roulement diminuant progressivement depuis les bords de rainures P₀, P₂ en direction de l'épaulement le plus proche respectif du bandage pneumatique (1) sur une distance qui ne dépasse pas 10 % de la largeur de bande de roulement TW.

2. Bande de roulement (2) pour un bandage pneumatique (1) selon la revendication 1, dans laquelle les nervures centrales (22, 23) s'étendant en direction circonférentielle sont coupées par des lamelles (14).

3. Bande de roulement (2) pour un bandage pneumatique (1) selon la revendication 1, dans laquelle les nervures centrales (22, 23) s'étendant en direction circonférentielle englobent des rainures borgnes (52, 53).

4. Bande de roulement (2) pour un bandage pneumatique (1) selon la revendication 1, dans laquelle la largeur de la rainure la plus centrale (8, 57, 68) s'étendant en direction circonférentielle à la surface de la bande de roulement est comprise entre 5 et 20 mm.

5. Bande de roulement (2) pour un bandage pneumatique (1) selon la revendication 1, dans laquelle la rainure la plus centrale (8, 57, 68) s'étendant en direction circonférentielle est espacée du plan équatorial EP sur une distance qui représente au maximum 25 % de la largeur de bande de roulement TW.

6. Bande de roulement (2) pour un bandage pneumatique (1) selon la revendication 5, dans laquelle les angles α₁ se situent dans la plage entre 2 et 7 degrés et de manière plus préférée, entre 3 et 5 degrés.

7. Bande de roulement (2) pour un bandage pneumatique (1) selon la revendication 1, dans laquelle la hauteur supplémentaire de bande de roulement au bord de la rainure la plus centrale (8, 57, 68) est comprise entre 0,3 et 1,7 mm et de manière de loin préférée entre 0,8 et 1,2 mm.

8. Bande de roulement (2) pour un bandage pneumatique (1) selon la revendication 1, dans laquelle
- en section transversale axiale de la bande de roulement (2), la surface de bande de roulement externe en direction radiale, sur un premier côté et sur un deuxième côté de la rainure la plus centrale, possède au moins un premier et au moins un deuxième rayon de courbure R₁, respectivement R₂ ;
- dans laquelle le premier rayon de courbure R₁, dont le centre C₁ est situé à l'extérieur de la surface de bande de roulement en direction radiale dans un plan NP parallèle au plan équatorial EP et est disposé entre le premier côté de la rainure centrale (8, 57, 68) et le premier épaulement du bandage pneumatique, s'étend depuis le point P₀ sur le bord de la paroi de rainure jusqu'au point P₁ situé à une distance qui représente entre 5 % et 15 % de la largeur de bande de roulement, en définissant ainsi une première surface de bande de roulement convexe externe en direction radiale ; et
- dans laquelle le deuxième rayon de courbure R₂, dont le centre C₂ est situé à l'extérieur de la surface de bande de roulement en direction radiale dans un plan parallèle au plan équatorial EP et est disposé entre le deuxième côté (16) de la rainure centrale et le deuxième épaulement du bandage pneumatique, s'étend depuis le point P₂ sur le bord de la paroi latérale de rainure (16) jusqu'à un point P₃ situé à une distance qui représente entre 5 % et 15 % de la largeur de bande de roulement, en définissant ainsi une deuxième surface de bande de roulement convexe externe en direction radiale.

9. Bande de roulement (2) pour un bandage pneumatique (1) selon la revendication 8, dans laquelle les centres de courbures C₁ et C₂ sont situés de préférence dans un plan disposé, à partir des bords respectifs P₀, P₂ de la rainure la plus centrale (8, 57, 68) qu'ils définissent, à une distance qui représente entre 5 % et 10 % de la largeur de bande de roulement.

10. Bande de roulement (2) pour un bandage pneumatique (1) selon la revendication 8, dans laquelle le point P₁ est espacé du point P₀ sur une distance qui représente environ 7 % de la largeur de bande de roulement et le point P₃ est espacé du point P₂ sur une distance qui représente environ 7 % de la largeur de bande de roulement.

11. Bande de roulement (2) pour un bandage pneumatique (1) selon la revendication 10, dans laquelle, à la place d'un rayon de courbure, on prévoit deux rayons de courbures différents R₁ sur au moins un côté de la rainure la plus centrale (8, 57, 68), les centres de courbures desdits rayons étant d'autant plus éloignés de la paroi de rainure respective que les rayons sont longs.

12. Bande de roulement (2) pour un bandage pneumatique (1) selon la revendication 1, dans laquelle le bandage pneumatique (1) possède un rapport nominal d'aspect inférieur à 55.
